# EUROPÄISCHE PATENTSCHRIFT

(11) **EP 0 428 037 B1**
(45) Veröffentlichungstag und Bekanntmachung des Hinweises auf die Patenterteilung: **05.05.1993**
(21) Anmeldenummer: 90121160.7
(22) Anmeldetag: 06.11.1990
(51) Int. Cl.: B01D 46/12, F01N 3/28, F01N 1/08, B01J 35/04

(54) **Filter zum Abscheiden von Verunreinigungen**
Filter for eliminating pollutants
Filtre pour éliminer des impuretées

(30) Priorität: 14.11.1989 DE 3937809
(43) Veröffentlichungstag der Anmeldung: 22.05.1991
(73) Patentinhaber: Schwäbische Hüttenwerke Gesellschaft mit beschränkter Haftung, D-73414 Aalen (DE)
(72) Erfinder: Härle, Hans A., W-7085 Bopfingen (DE)
(74) Vertreter: Lorenz, Werner, Dipl.-Ing.

(56) Entgegenhaltungen:
- DE-U- 8 705 607
- US-A- 4 300 925

## Beschreibung

Die Erfindung betrifft einen Filter zum Abscheiden von Verunreinigungen aus einem flüssigen oder gasförmigen Medium, insbesondere von schädlichen Bestandteilen aus den Abgasen eines Verbrennungsmotores, mit einem Filterkörper, der eine Vielzahl von Einlaß- und Auslaßkanälen aufweist, wobei die Einlaßkanäle durch Reaktionsräume bildende Filterwände von den Auslaßkanälen getrennt sind, wobei die Filterkörper aus einer Vielzahl von formgepreßten, hochtemperaturbeständigen Filterplatten bestehen, die übereinander angeordnet eine Vielzahl von Strömungskanälen zwischen sich bilden, wobei die Kanäle zur Bildung von Einlaß- bzw. Auslaßöffnungen jeweils auf einer Stirnseite offen und auf der gegenüberliegenden Stirnseite geschlossen sind.

Insbesondere Abgase von Verbrennungsmotoren werden wegen ihrer Umweltschädlichkeit in verstärktem Maße von darin enthaltenen gesundheits- und umweltschädlichen Verunreinigungen gereinigt. So werden in Dieselmotoren Rußfilter aus keramischem Werkstoff verwendet, die in die Auspuffanlage eingesetzt sind. Die heißen Motorabgase strömen in die Einlaßkanäle des Filterkörpers ein, durchdringen die porösen, die Kanäle umgebenden Filterwände und werden anschließend über die Auslaßkanäle wieder abgeleitet. Aufgrund der hohen Temperatur wird dabei der Ruß, d.h. Kohlenstoff, in den Filterwänden in Gas und Asche umgewandelt, welche dann zusammen mit dem Abgas aus dem Auspuff ausgeblasen werden.

Keramische Filterkörper besitzen jedoch verschiedene Nachteile. Insbesondere sind sie empfindlich gegen rasche Temperaturänderungen, örtliche Überhitzungen durch die Abgase und gegen Stöße und Schläge.

Aus der EP-A-0 331 885 von der gleichen Anmelderin ist bereits ein Abgasfilter bekannt, bei dem der Filterkörper aus mehreren formgepreßten, hochtemperaturbeständigen Sinterteilen besteht. Die einzelnen Sinterteile, die identisch ausgebildet sind, werden dabei gemeisam zu einem Filterkörper miteinander verbunden. Die Verbindung kann z.B. durch einen Sintervorgang oder durch Verschweißen erfolgen.

Eine Verbindung durch einen Sintervorgang ist relativ aufwendig, und die Form ist damit endgültig festgelegt. Schweißverbindungen sind anpassungsfähiger und gegebenenfalls auch nachträglich abänderbar. Nachteilig dabei ist jedoch, daß sich beim Schweißen thermische Spannungen ergeben können, die zu Korrosionsproblemen führen können.

Der vorliegenden Erfindung liegt die Aufgabe zugrunde, einen Filter der eingangs erwähnten Art zu schaffen, der als Serienprodukt sehr billig und im Bedarfsfalle automatisch herstellbar ist, wobei dieser bezüglich seiner Zusammenstellung und gegebenenfalls von Änderungen sehr variabel ist und beim Zusammenbau keine negativen Einflüsse auf den Filterkörper selbst hat.

Erfindungsgemäß wird diese Aufgabe dadurch gelöst, daß der Filterkörper aus einer Vielzahl von einzelnen und separaten Filterplatten zusammengesetzt ist, wobei die Abschließung und Verbindung von jeweil benachbart zueinander liegenden Filterplatten abwechselnd auf jeder Seite durch jeweils über die Stirnseite von zwei benachbart zueinander liegenden Filterplatten geschobene und diese dichtend umfassende Bügelteile erfolgt, die sich über die ganze Länge bzw. Breite der Filterplatte erstrecken, und wobei die Bügelteile mit hochtemperaturbeständigen Legierungsbestandteilen versehen sind oder aus hochtemperaturbeständigem Material bestehen.

Durch die Verwendung der erfindungsgemäßen Bügelteile zur Verbindung der einzelnen Filterplatten miteinander, wobei gleichzeitig auch die Kanalseite auf der dazugehörigen Stirnseite abgeschlossen wird, lassen sich Filterplatten in beliebiger Anzahl übereinander stapeln und anschließend durch die Bügelteile miteinander verbinden. Die Verbindung kann dabei auf verschiedene Weise erfolgen. Voraussetzung ist lediglich, daß wenigstens annähernd eine Dichtheit erreicht wird. So können z.B. Klemmverbindungen vorgesehen sein.

Diese Verbindungsart ist automatisierbar und damit zur Serienherstellung auf billige Weise geeignet. Ebenso sind im Bedarfsfalle noch nachträglich Erweiterungen oder auch ein Austausch von beschädigten oder zerstörten Filterplatten möglich.

Dadurch, daß die Bügelteile mit hochtemperaturbeständigen Legierungsbestandteilen versehen oder aus hochtemperatubeständigem Material hergestellt sind, werden die der Einlaufseite zugewandten Stirnseiten der Filter- bzw. der Sinterplatten, die z.B. bei einer Reinigung von heißen Abgasen oder auch von anderen heißen Medien einer hohen thermischen Belastung ausgesetzt sind, sind auf diese Weise besser geschützt. Verwendet man entsprechend hochtemperaturbeständiges Material oder entsprechende Legierungsbestandteile, so werden bei einem ersten Auftreffen von heißen Abgasen oder heißen Flüssigkeiten thermische Rißgefahren vermieden, denn die Bügelteile können den ersten "Stoß" aufnehmen und ableiten bzw. verteilen.

Die Filterplatten können aus den verschiedensten Materialien bestehen. So können z.B. in vorteilhafter Weise die Platten als Sinterplatten ausgebildet sein, denn aufgrund der hohen Temperaturbeständigkeit sind derartige Platten sehr gut geeignet. Ebenso können jedoch auch im Schweißverfahren hergestellte einfache, formgepreßte Filterplattten verwendet werden. In gleicher Weise läßt sich eine Filterplatte aus formgepreßtem Drahtgeflecht oder -gewirk verwenden.

In einer weiteren sehr vorteilhaften Ausgestaltung der Erfindung kann vorgesehen sein, daß die Bügelteile mit katalytisch wirkenden Bestandteilen beschichtet oder versehen sind.

Setzt man den erfindungsgemäßen Filter zur Reinigung der Abgase von Verbrennungsmotore ein, so können auf diese Weise weitere schädliche Abgaskomponenten, wie z.B. Kohlenmonoxyd, Kohlenwasserstoffe und Stickoxyde abgeschieden werden.

Katalytisch wirkende Materialien sind allgemein bekannt, wie z.B. Platin, Rhodium oder Vanadium.

In einfacher Weise können die Bügelteile U-förmig gebogene Formteile sein, welche z.B. bei einer entsprechenden Elastizität jeweils über zwei aneinanderliegende Stirnseiten von benachbart zueinander liegenden Filterplatten aufgeklemmt werden.

Von Vorteil ist es, wenn die Filterplatten an den Seiten zwischen den sich gegenüberliegenden Bügelteilen von Dichtplatten eingefaßt sind.

Auf diese Weise wird eine seitliche Dichtung erreicht, wobei die Dichtplatten gleichzeitig auch bei der Montage der Filterplatten zur Führung dienen können. Die Verbindung zwischen den Dichtplatten und den Filterplatten kann auf beliebige Weise erfolgen.

Von Vorteil ist es, wenn die Bügelteile mit den seitlichen Dichtplatten verbunden sind. Die Verbindung kann dabei in einfacher Weise z.B. durch Verschweißen erfolgen. Da dabei die Filterplatten nicht oder nur in Randbereichen davon beeinträchtigt werden, sind nachteilige Auswirkungen auf die Filterplatten selbst nicht zu erwarten.

In einer Weiterbildung der Erfindung kann vorgesehen sein, daß auf eine Vielzahl von aufeinandergepreßten Filterplatten ein Abschlußdeckel aufgesetzt ist.

Wenn die gewünschte Anzahl von Filterplatten für einen fertigen Filterkörper ausgewählt worden ist, kann man zur Montage einen Abschlußdeckel auf einer oder im Bedarfsfalle auch auf beiden Seiten vorsehen, wobei der Abschlußdeckel mit Druck auf die Filterplatten gepreßt wird und anschließend eine Verbindung mit den Filterplatten oder einem anderen die Filterplatten umgebenden Teil geschaffen wird, damit zwischen den einzelnen Filterplatten eine Dichtheit gewährleistet ist. Dies gilt insbesondere für die Seitenteile zwischen den sich gegenüberliegenden Bügelteilen.

Die Filterplatten können in einem Strömungsgehäuse angeordnet sein, wobei der Abschlußdeckel mit dem Strömungsgehäuse verbunden ist. In diesem Falle stapelt man die Sinterplatten übereinander in einem Gehäuse und preßt als Abschluß den Deckel oben auf, wonach man diesen z.B. mit dem Strömungsgehäuse verschweißt.

Damit wird auf einfache Weise ein Filter mit einem diesen umgebenden Gehäuse mit einem Zulauf und einem Ablauf geschaffen.

Statt seitlichen Dichtplatten können die Filterplatten seitlich zwischen den sich gegenüberliegenden Bügelteilen auch so ausgebildet sein, daß sie selbstdichtend sind. Dies kann z.B. durch Dichtlippen erfolgen, wobei bei einer Verbindung unter Vorspannung z.B. durch einen aufgesetzten Abschlußdeckel eine einwandfreie Dichtheit erreicht werden kann.

In einfacher Weise kann man die Dichtlippen durch stufenförmige Absätze in den Filterplatten bilden.

Einsatzmöglichkeiten für den erfindungsgemäßen Filter sind neben einer Abgasreinigung von Verbrennungsmotoren selbstverständlich auch andere Filter zum Abscheiden von Verunreinigungen aus gasförmigen oder flüssigen Medien, insbesondere, wenn diese hohe Temperaturen besitzen.

Nachfolgend sind Ausführungsbeispiele der Erfindung anhand der Zeichnung prinzipmäßig beschrieben.

Es zeigt:
- Fig. 1: einen vereinfachten Längsschnitt durch einen in einem Gehäuse angeordneten Filter
- Fig. 2: ausschnittsweise eine vergrößerte Darstellung von Filterplatten nach der Fig. 1
- Fig. 3: eine Draufsicht aus Richtung A gemäß Fig. 2 auf eine Filterplatte (im verkleinerten Maßstab)
- Fig. 4: einen Schnitt nach der Linie IV-IV (ausschnittsweise) in vergrößerter Darstellung ohne Seitenwände.

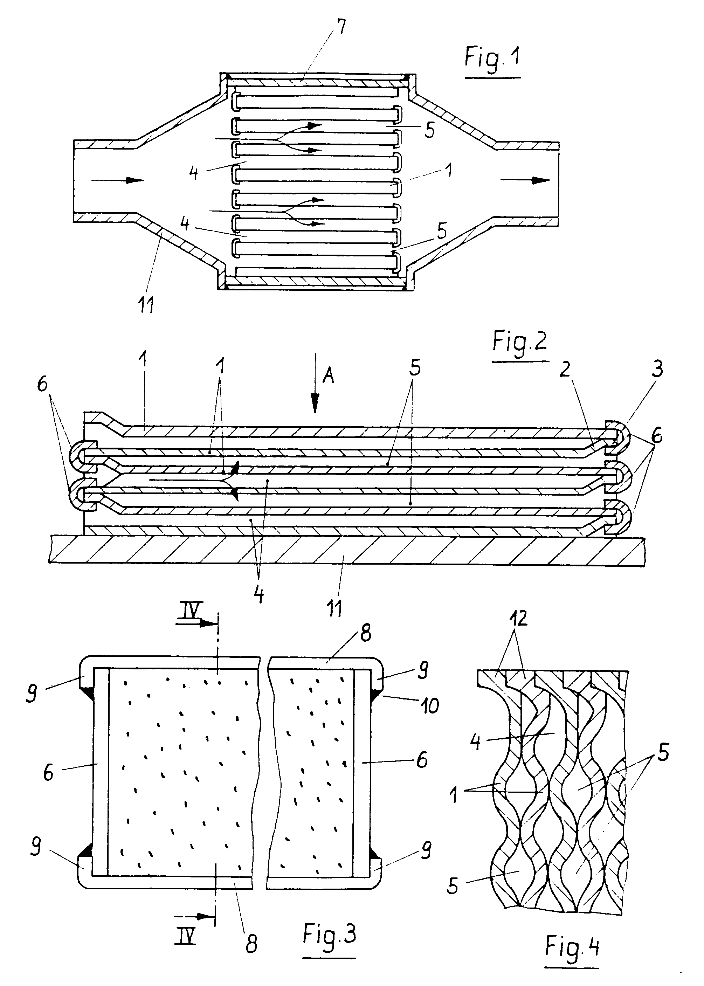

Die dargestellten Ausführungsbeispiele beziehen sich auf einen Filter zur Beseitung von Bestandteilen aus Abgasen eines Verbrennungsmotores. Der Filter ist aus einer Vielzahl von formgepreßten, hochtemperaturbeständigen Filterplatten 1 aufgebaut, die übereinander angeordnet sind. Die Filterplatten können gesintert sein und besitzen eine wellenförmige Oberfläche (siehe Fig. 4), und zwar derart, daß sich in Strömungsrichtung Strömungskanäle ergeben. Dabei bilden jeweils die Erhöhungen der Wellen gleichzeitig auch Abstandshalter für die benachbart dazu liegende Filterplatte 1. Die Filterplatten sind identisch ausgebildet und besitzen jeweils an einem Ende eine Stirnseite, die eine direkte und gerade Verlängerung der Filterfläche darstellt, während sie auf der anderen Seite eine Abknickung 2 aufweist, die in einem geraden Endstück 3 ausläuft, das parallel zur Oberfläche der Filterplatte liegt.

Zum Herstellen eines Filters wird die entsprechende Anzahl von Filterplatten 1 übereinander gelegt, und zwar derart, daß jeweils eine Stirnseite mit einem geraden Teil und eine Stirnseite mit der Abknickung 2 und dem Endstück 3 aufeinander liegen. Auf diese Weise werden jeweils zwischen benachbartliegenden Filterplatten nicht nur Strömungskanäle gebildet, sondern jeweils abwechselnd werden durch die Abknickungen 2 bzw. die Endstücke 3 Abschlüsse der Kanäle erreicht.

Wie insbesondere aus der Fig. 2 ersichtlich ist, bedeutet dies, daß damit die Einlaßkanäle 4, die sich gemäß Strömungsrichtung in der Fig. 1, welche durch Pfeile dargestellt ist, links befinden, auf der rechten Seite abgeschlossen sind. Andererseits sind Auslaßkanäle 5, die auf der rechten Seite - gemäß Fig. 1 und 2 - offen sind, auf der Eingangsseite abgeschlossen. Dies bedeutet zur Reinigung muß das Medium jeweils - siehe Pfeile in Fig. 1 - durch die Wände der Filterplatten, die damit Reaktionsräume bilden, hindurchtreten, wobei es zu den gewünschten Abscheidungen und Reaktionen kommt.

Zur dauerhaften Verbindung und zur Abdichtung werden jeweils über ein Paar von Stirnseiten, die aus einer geraden Stirnseite und einem Endstück 3 mit der Abknickung 2 bestehen, Bügelteile 6 geschoben, die als U-förmig gebogene Formteile ausgebildet sind. Die Bügelteile sind aus einem hochtemperaturbeständigen Material und weisen eine derartige Elastizität auf, daß sie unter Spannung auf die Filterplatten 1 aufgeschoben werden, damit eine Abdichtung ergeben und gleichzeitig auch für eine feste Verbindung des Stapels von Filterplatten 1 sorgen.

Damit die Filterplatten auch an den Seitenwänden zwischen den sich gegenüberliegenden Bügelteilen 6 dicht sind, wird nach einer Übereinanderstapelung der Filterplatten 1 ein entsprechender Druck auf diese ausgeübt und anschließend ein Abschlußdeckel 7 aufgelegt und mit den Filterplatten oder mit seitlichen Dichtplatten 8 verbunden (siehe Fig. 3).

Die seitlichen Dichtplatten 8 besitzen vorzugsweise an den den Bügelteilen 6 zugewandten Stirnseiten der Filterplatten 1 jeweils nach innen gerichtete Abwinkelungen 9. Die Abwinkelungen 9 dienen zum einen bei der Montage der Filterplatten 1 zu deren Führung und zum anderen können an die Abwinkelungen auch die Bügelteile 6 befestigt, z.B. angeschweißt werden. Entsprechende Schweißnähte 10 sind in der Fig. 3 dargestellt.

Wird der Filter in ein Strömungsgehäuse 11 eingebaut, so kann der aus den Filterplatten 1 gebildete Filter entsprechend in das Strömungsgehäuse 11 eingelegt werden, wonach nach einer Verbindung der einzelnen Filterplatten über die Bügelteile 6 der Abschlußdeckel 7 auch an dem Strömungsgehäuse 11 selbst, nach Aufbringung einer Vorspannung auf die Filterplatten, an dem Strömungsgehäuse 11 befestigt, z.B. durch Verschweissen, werden kann.

Wenigstens die auf der Einlaufseite angeordneten Bügelteile 6, welche besonders stark den einströmenden heißen Abgasen ausgesetzt sind, sind aus einem entsprechend hochtemperaturbeständigen Material auszubilden. Zusätzlich kann man diese Bügelteile 6 auch noch mit einem katalytisch wirkenden Werkstoff versehen.

Statt seitlicher Dichtplatten 8 können die Filterplatten 1 gegebenenfalls auch in ihren Seitenbereichen so ausgebildet sein, daß sie jeweils zwischen sich Dichtlippen 12 bilden. Eine derartige Ausgestaltung ist in der Fig. 4 dargestellt, wobei die Dichtlippen 12 als stufenförmige Absätze ausgebildet sind. Werden die Filterplatten 1 beim Zusammenbau - wie vorstehend angegeben - zusammengepreßt, so wird auf diese Weise eine Abdichtung gewährleistet.

Filterplatten 1 als Sinterplatten werden in bekannter Weise in einem Sintervorgang nach einer vorangegangenen Formpressung gebildet. Als Ausgangsmaterial können Metallpulver, Metalldrähte oder Metallspäne verwendet werden. Um eine genügend große Porosität zu erreichen, wird man entweder grobes Metallpulver oder in bevorzugter Weise Metalldrähte oder Metallspäne verwenden, die Längen von 1-10 mm besitzen können. Selbstverständlich sind im Bedarfsfalle auch noch andere Werte möglich.

## Patentansprüche

1. Filter zum Abscheiden von Verunreinigungen aus einem flüssigen oder gasförmigen Medium, insbesondere von schädlichen Bestandteilen aus den Abgasen eines Verbrennungsmotores, mit einem Filterkörper, der eine Vielzahl von Einlaß- und Auslaßkanälen (4,5) aufweist, wobei die Einlaßkanäle (4) durch Reaktionsräume bildende Filterwände von den Auslaßkanälen (5) getrennt sind, wobei die Filterkörper aus einer Vielzahl von formgepreßten, hochtemperaturbeständigen Filterplatten (1) bestehen, die übereinander angeordnet eine Vielzahl von Strömungskanälen (4,5) zwischen sich bilden, wobei die Kanäle zur Bildung von Einlaß- bzw. Auslaßöffnungen jeweils auf einer Stirnseite offen und auf der gegenüberliegenden Stirnseite geschlossen sind,
**dadurch gekennzeichnet**, daß
der Filterkörper aus einer Vielzahl von einzelnen und separaten Filterplatten (1) zusammengesetzt ist, wobei die Abschließung und Verbindung von jeweils benachbart zueinander liegenden Filterplatten (1) abwechselnd auf jeder Seite durch jeweils über die Stirnseiten von zwei benachbart zueinanderliegenden Filterplatten geschobene und diese dichtend umfassende Bügelteile (6) erfolgt, die sich über die ganze Länge bzw. Breite der Filterplatte erstrecken, und wobei die Bügelteile (6) mit hochtemperaturbeständigen Legierungsbestandteilen versehen sind oder aus hochtemperaturbeständigem Material bestehen.

2. Filter nach Anspruch 1,
**dadurch gekennzeichnet**, daß
die Filterplatten als Sinterplatten (1) ausgebildet sind.

3. Filter nach Anspruch 1 oder 2,
**dadurch gekennzeichnet**, daß
die Bügelteile (6) mit katalytisch wirkenden Bestandteilen beschichtet oder versehen sind.

4. Filter nach Anspruch 1, 2 oder 3
**dadurch gekennzeichnet**, daß
die Bügelteile in eine U-Form gebogene Formteile (6) sind.

5. Filter nach einem der Ansprüche 1-4,
**dadurch gekennzeichnet**, daß
die Filterplatten (1) an den Seiten zwischen den sich gegenüberliegenden Bügelteilen (6) von Dichtplatten (8) eingefaßt sind.

6. Filter nach Anspruch 5,
**dadurch gekennzeichnet**, daß
die Bügelteile (6) mit den seitlichen Dichtplatten (8) verbunden sind.

7. Filter nach einem der Ansprüche 1-6,
**dadurch gekennzeichnet**, daß
auf eine Vielzahl von aufeinandergepreßten Filterplatten (1) ein Abschlußdeckel (7) aufgesetzt ist.

8. Filter nach Anspruch 7,
**dadurch gekennzeichnet**, daß
der Abschlußdeckel (7) an den seitlichen Dichtplatten (8) befestigt ist.

9. Filter nach Anspruch 8,
**dadurch gekennzeichnet**, daß
die Dichtplatten (8) nach innen gerichtete Abwinkelungen (9) aufweisen.

10. Filter nach einem der Ansprüche 7-9,
**dadurch gekennzeichnet**, daß
die Filterplatten (1) in einem Strömungsgehäuse (11) angeordnet sind, wobei der Abschlußdeckel (7) mit dem Strömungsgehäuse (11) verbunden ist.

11. Filter nach einem der Ansprüche 1-10,
**dadurch gekennzeichnet**, daß
die Filterplatten (1) seitlich zwischen den sich gegenüberliegenden Bügelteilen (6) mit Dichtlippen (12) versehen sind.

12. Filter nach Anspruch 11,
**dadurch gekennzeichnet**, daß
die Dichtlippen durch stufenförmige Absätze (12) in den Filterplatten (1) gebildet sind.

## Claims

1. Filter for eliminating pollutants from a liquid or gaseous medium, especially harmful constituents from the exhaust gases of an internal combustion engine, comprising a filter body having a plurality of inlet and outlet channels (4, 5), the inlet channels (4) being separated from the outlet channels (5) by filter walls forming reaction chambers, the filter bodies consisting of a plurality of compression moulded, high-temperature resistant filter plates (1) which are arranged on top of one another to form a plurality of flow channels (4, 5), the channels each being open at one end and closed at the opposite end in order to form inlet and outlet openings, characterised in that the filter body is composed of a plurality of individual and separate filter plates (1), adjacent filter plates (1) being sealed and connected alternately at either end by clamp members (6) which are slipped over the ends of two adjacent filter plates, enclose the latter in a sealed manner and extend over the entire length or width of the filter plate, and the clamp members (6) being provided with high-temperature resistant alloying constituents or consisting of high-temperature resistant material.

2. Filter according to claim 1, characterised in that the filter plates are designed as sintered plates (1).

3. Filter according to claim 1 or 2, characterised in that the clamp members (6) are coated or provided with catalytically active constituents.

4. Filter according to claim 1, 2 or 3, characterised in that the clamp members are moulded parts (6) bent into a U-shape.

5. Filter according to one of claims 1-4, characterised in that the filter plates (1) are edged by sealing plates (8) at the sides between the opposing clamp members (6).

6. Filter according to claim 5, characterised in that the clamp members (6) are connected to the lateral sealing plates (8).

7. Filter according to one of claims 1-6, characterised in that a sealing cover (7) is placed over a plurality of filter plates (1) pressed together.

8. Filter according to claim 7, characterised in that the sealing cover (7) is secured to the lateral sealing plates (8).

9. Filter according to claim 8, characterised in that the sealing plates (8) have inwardly directed bends (9).

10. Filter according to one of claims 7-9, characterised in that the filter plates are arranged in a flow housing (11), the sealing cover (7) being connected to the flow housing (11).

11. Filter according to one of claims 1-10, characterised in that the filter plates (1) are provided with sealing lips (12) laterally between the opposing clamp members (6).

12. Filter according to claim 11, characterised in that the sealing lips are formed by stepped shoulders (12) in the filter plates (1).

## Revendications

1. Filtre pour éliminer des impuretés d'un fluide liquide ou gazeux, notamment des composants nocifs des gaz d'échappement d'un moteur à combustion, ayant un corps filtrant qui comporte une pluralité de canaux d'entrée et de sortie (4, 5), les canaux d'entrée (4) étant séparés des canaux de sortie (5) par des parois filtrantes formant des zones de réaction, les corps filtrants se composant d'une pluralité de plaques filtrantes réfractaires (1) formées par pressage qui définissent entre elles une pluralité de canaux d'écoulement (4, 5), chacun des canaux étant ouvert sur une face frontale et fermé sur la face frontale opposée pour former des ouvertures d'entrée et des ouvertures de sortie, **caractérisé** en ce que le corps filtrant est composé d'une pluralité de plaques filtrantes (1) individuelles ou séparées et en ce que la fermeture et la fixation mutuelle des plaques filtrantes adjacentes (1) sont réalisées alternativement sur chaque face au moyen d'éléments recourbés (6) qui s'étendent sur toute la longueur ou la largeur de la plaque filtrante, chacun de ces éléments étant emboîté sur les bords frontaux de deux plaques filtrantes adjacentes en entourant ceux-ci de manière étanche, les éléments recourbés (6) comportant des composants d'alliage réfractaires aux hautes températures ou étant faits d'un matériau réfractaire aux hautes températures.

2. Filtre selon la revendication 1, **caractérisé** en ce que les plaques filtrantes sont formées par des plaques frittées (1).

3. Filtre selon la revendication 1 ou 2, **caractérisé** en ce que les éléments recourbés (6) sont revêtus ou pourvus de composants à effet catalytique.

4. Filtre selon la revendication 1, 2 ou 3, **caractérisé** en ce que les éléments recourbés sont des éléments profilés recourbés en U (6).

5. Filtre selon l'une des revendications 1 à 4, **caractérisé** en ce que les plaques filtrantes (1) sont enchâssées dans des plaques d'étanchéité (8) sur les côtés entre les éléments recourbés opposés (6).

6. Filtre selon la revendication 5, **caractérisé** en ce que les éléments recourbés (6) sont raccordés aux plaques latérales d'étanchéité (8).

7. Filtre selon l'une des revendications 1 à 6, **caractérisé** en ce qu'un couvercle de fermeture (7) est placé sur une pluralité de plaques filtrantes (1) pressées l'une sur l'autre.

8. Filtre selon la revendication 7, **caractérisé** en ce que le couvercle de fermeture (7) est fixé aux plaques latérales d'étanchéité (8).

9. Filtre selon la revendication 8, **caractérisé** en ce que les plaques d'étanchéité (8) comportent des rebords (9) dirigés vers l'intérieur.

10. Filtre selon l'une des revendications 7 à 9, **caractérisé** en ce que les plaques filtrantes (1) sont disposées dans un boîtier d'écoulement (11) auquel est fixé un couvercle de fermeture (7) .

11. Filtre selon l'une des revendications 1 à 10, **caractérisé** en ce que les plaques filtrantes (1) sont pourvues de lèvres latérales d'étanchéité (12) entre les éléments recourbés opposés (6).

12. Filtre selon la revendication 11, **caractérisé** en ce que les lèvres d'étanchéité sont formées par des décrochements en gradins (12) sur les plaques filtrantes (1).
